# EUROPÄISCHE PATENTSCHRIFT

(11) **EP 3 661 770 B1**
(45) Veröffentlichungstag und Bekanntmachung des Hinweises auf die Patenterteilung: **18.11.2020**
(21) Anmeldenummer: 18743733.0
(22) Anmeldetag: 16.07.2018
(51) Int. Cl.: B60G 7/00

(54) **DREIPUNKTLENKER UND HERSTELLUNGSVERFAHREN FÜR EINEN DREIPUNKTLENKER**
THREE-POINT SUSPENSION LINK AND PRODUCTION METHOD FOR A THREE-POINT SUSPENSION LINK
BRAS DE SUSPENSION À TROIS POINTS ET PROCÉDÉ DE FABRICATION D'UN BRAS DE SUSPENSION À TROIS POINTS

(30) Priorität: 04.08.2017 DE 102017213563
(43) Veröffentlichungstag der Anmeldung: 10.06.2020
(73) Patentinhaber: ZF Friedrichshafen AG, 88046 Friedrichshafen (DE)
(72) Erfinder: STIEGLITZ, Andre, 49086 Osnabrück (DE); MÜLLER, Ingolf, 76872 Minfeld (DE); BAUER, Philipp, 88097 Eriskirch (DE)
(74) Vertreter: ZF Friedrichshafen AG
(86) Internationale Anmeldenummer: PCT/EP2018/069188
(87) Internationale Veröffentlichungsnummer: WO 2019/025164

(56) Entgegenhaltungen:
- DE-A1-102005 027 173
- DE-A1-102015 215 077
- DE-A1-102015 218 026
- DE-A1-102016 211 212
- DE-A1-102016 211 213
- JP-A- H10 109 511
- US-A- 4 650 620

## Beschreibung

Die vorliegende Erfindung betrifft einen Dreipunktlenker mit den oberbegrifflichen Merkmalen nach Anspruch 1 und ein Herstellungsverfahren für einen Dreipunktlenker mit den oberbegrifflichen Merkmalen nach Anspruch 14.

Dreipunktlenker werden im NKW-Bereich in Sattelzugmaschinen eingesetzt, um die Achse am Strukturrahmen anzubinden. Diese tragen in erheblichem Maße zur Querführung und Längsführung der Achse bei. Ein Dreipunktlenker führt die Achse in einer oberen Lenkerebene und beeinflusst die Fahreigenschaften des NKWs. Jeder Dreipunktlenker ist während eines Fahrbetriebs des NKWs hohen Längslasten und hohen Querlasten, sowie Wankbewegungen, die z. B. während einer Kurvenfahrt des NKWs auftreten, ausgesetzt. Dadurch stellen sich besondere Anforderungen an die Steifigkeit desselben.

Aus der DE102014214827A1 ist ein Mehrpunktlenker bekannt, der im Wesentlichen ausgebildet ist aus einer Faser-Kunststoff-Verbund-Struktur. Die Faser-Kunststoff-Verbund-Struktur ist einstückig und stoffschlüssig, ohne eine Verstärkungsstruktur ausgebildet.

Die JP H10 109511 A beschreibt einen Lenker entsprechend des Oberbegriffs des Anspruchs 1 mit zwei karosserieseitigen Endgliedern aus Leichtmetall zum Anschluss an eine Fahrzeugkarosserie und einem radseitigen Endglied aus Leichtmetall zum Anschluss an ein Fahrzeugrad. Zwischen den karosserieseitigen Endgliedern und dem radseitigen Endglied ist jeweils ein Kern aus einem Kunststoffschaum angeordnet. Die karosserieseitigen Endglieder, das radseitige Endglied und die Kerne sind zwischen zwei Platten aus faserverstärktem Kunststoff angeordnet. Die so gebildete Anordnung ist von einer Umhüllung aus faserverstärktem Kunststoff umschlossen.

Die US 4 650 620 A beschreibt einen Lenker mit einem Kern aus PolyurethanSchaum, wobei der Kern zwei Arme aufweist, an deren Enden jeweils eine Lagerhülse vorgesehen ist. Der Kern und die Lagerhülsen sind mit Fasern umwickelt, die mit Harz beschichtet oder imprägniert sind. Jede Lagerhülse weist einen in den Kern eingebetteten Stift auf, der sich in Richtung der Lagerhülse verjüngt. Die Stifte dienen zur Fixierung der Lagerhülsen an dem Kern vor dem Umwickeln. Ferner weist der Kern einen zylindrischen Teil auf, von dem sich die Arme weg erstrecken und an dem ein Lagerflansch befestigt ist, der in den Kern eingebettete Stifte aufweist, die sich in Richtung des Lagerflansches verjüngen.

Der vorliegenden Erfindung liegt ausgehend vom Stand der Technik die Aufgabe zu Grunde, einen verbesserten Dreipunktlenker vorzuschlagen. Dieser soll für den Leichtbau geeignet sein und somit eine geringe Masse aufweisen.

Die vorliegende Erfindung schlägt ausgehend von der vorgenannten Aufgabe einen Dreipunktlenker mit den Merkmalen nach Patentanspruch 1 und ein Herstellungsverfahren für einen Dreipunktlenker mit den Merkmalen nach Patentanspruch 14 vor. Weitere vorteilhafte Ausgestaltungen und Weiterbildungen gehen aus den Unteransprüchen hervor.

Ein Dreipunktlenker für ein Fahrwerk eines Fahrzeugs umfasst zwei Lasteinleitelemente, ein Zentrallasteinleitelement, zwei Kernprofile und eine Tragwicklung. Die Kernprofile sind aus einem schubsteifen Material ausgeformt. Die Tragwicklung ist aus einem Faserkunststoffverbundmaterial ausgeformt. Der Dreipunktlenker weist zwei Arme und einen Zentrallagerbereich auf. An dem Zentrallagerbereich ist das Zentrallasteinleitelement angeordnet. Jeder Arm ist mit dem Zentrallagerbereich verbunden. Jeder Arm weist eines der Lasteinleitelemente auf, das an einem dem Zentrallagerbereich entgegengesetzten Ende des entsprechenden Arms angeordnet ist. Jeder Arm weist ein Kernprofil auf, das räumlich zwischen dem Lasteinleitelement und dem Zentrallasteinleitelement angeordnet ist. Die Tragwicklung umschließt die Kernprofile und das Zentrallasteinleitelement in einem Teilbereich und ist wirkverbunden mit den Kernprofilen, den Lasteinleitelementen und dem Zentrallasteinleitelement. Das Fahrzeug ist vorzugsweise ein NKW, kann aber alternativ dazu ein PKW sein. Wirkverbunden heißt hierbei, dass zwei Bauelemente direkt miteinander verbunden sind, wobei diese Verbindung derart beschaffen ist, dass Kräfte und Momente zwischen den beiden Bauelementen weitergeleitet werden können.

Die beiden Lasteinleitelemente sind zueinander gleichförmig ausgeformt. Jedes Lasteinleitelement kann entweder aus einem metallischen Material oder aus einem Faserkunststoffverbundmaterial ausgeformt sein. Beispielsweise kann jedes Lasteinleitelement aus Aluminium, aus einem Stahl, aus Titan, aus einem langfaserverstärkten Duromer, z. B. SMC (Sheet Molding Compound), ausgeformt sein. Vorzugsweise werden die Lasteinleitelemente mittels eines Strangpressverfahrens mit geringem Fräsbearbeitungsanteil hergestellt. Jedes Lasteinleitelement kann entweder einteilig oder zweiteilig ausgeformt sein. Ist das Lasteinleitelement einteilig ausgeformt, ist es in einem Stück gefertigt, das nicht zerstörungsfrei in weitere Einzelteile zerlegt werden kann. Ist das Lasteinleitelement zweiteilig ausgeformt, weist es zwei Einzelteile auf, die jeweils einstückig ausgeformt sind. Beispielsweise kann das zweiteilige Lasteinleitelement zwei spiegelgleiche Einzelteile aufweisen. Alternativ kann das zweiteilige Lasteinleitelement zwei Einzelteile aufweisen, die voneinander verschieden ausgeformt sind.

Jedes Lasteinleitelement weist eine Lageraufnahme auf, die dazu geeignet ist, ein Lager aufzunehmen. Diese Lageraufnahmen weisen vorzugsweise einen kreisförmigen Querschnitt auf. Das Lager kann beispielsweise ein Gummi-Metall-Lager sein. Wird der Dreipunktlenker in einem Fahrwerk eines Fahrzeugs verwendet, dienen diese Lager dazu, den Dreipunktlenker an einem Fahrzeugaufbau, z. B. an einer Rahmenstruktur, abzustützen. Die Lageraufnahmen der beiden Lasteinleitelemente weisen jeweils eine Lagerachse auf, die vorzugsweise in derselben Ebene liegen. Diese Ebene ist z. B. senkrecht zu einer Mittelebene des Dreipunktlenkers und zu einer Lagerachse des Zentrallasteinleitelements. Der Dreipunktlenker ist vorzugsweise symmetrisch zu der Mittelebene ausgebildet. Jedes Lasteinleitelement ist an einem Arm des Dreipunktlenkers angeordnet und begrenzt diesen zu einer dem Zentrallagerbereich entgegengesetzten Seite hin. In einem Fahrbetrieb wirken auf diese Lager, die mit den jeweiligen Lasteinleitelementen wirkverbunden sind, Lasten ein. Diese werden über die Aufnahmen der Lasteinleitelemente an die Lasteinleitelemente weitergeleitet. Diese Lasten werden von den Lasteinleitelementen an die Tragwicklung weitergeleitet.

Das Zentrallasteinleitelement weist eine Lageraufnahme auf, die dazu geeignet ist, ein Lager aufzunehmen. Das Lager kann beispielsweise ein Gummi-Metall-Lager sein. Wird der Dreipunktlenker in einem Fahrwerk eines Fahrzeugs verwendet, dient dieses Lager dazu, den Dreipunktlenker mit einem Achsaufbau zu verbinden. Die Lageraufnahme des Zentrallasteinleitelements ist beispielsweise zylindrisch ausgeformt. Die Lageraufnahme des Zentrallasteinleitelements weist z. B. eine Lagerachse auf, die senkrecht ist zu der Ebene, in der die Lagerachsen der beiden Lasteinleitelemente liegen. Vorzugsweise liegt die Lagerachse der Lageraufnahme des Zentrallasteinleitelements in der Mittelebene des Dreipunktlenkers. Auf das Lager, das mit dem Zentrallasteinleitelement verbunden ist, wirken während eines Fahrbetriebs Lasten, wenn der Dreipunktlenker in einem Fahrzeug verwendet wird. Diese Lasten werden von diesem Lager aufgenommen und an das Zentrallasteinleitelement weitergeleitet, das die Lasten wiederum in die Tragwicklung einleitet.

Jeder Arm des Dreipunktlenkers weist ein Kernprofil auf. Diese Kernprofile sind aus einem schubsteifen Leichtbau-Material, vorzugsweise aus einem Faserkunststoffverbundmaterial (FKV) oder aus einem Schaummaterial ausgeformt. Vorzugsweise sind beide Kernprofile aus demselben Material ausgeformt, können aber alternativ dazu aus unterschiedlichen Materialien ausgeformt sein. Als FKV kann beispielsweise ein glasfaserverstärkter Kunststoff (GFK) verwendet werden. Alternativ dazu kann ein carbonfaserverstärkter Kunststoff (CFK) oder ein aramidfaserverstärkter Kunststoff (AFK) oder ein anderer geeigneter FKV verwendet werden. Als Schaummaterial kann beispielsweise ein Kunststoffschaum oder ein metallischer Schaum verwendet werden. Die Kernprofile können beispielsweise als Hohlprofile ausgeformt sein. Die Kernprofile dienen als Abstandshalter und ermöglichen eine Verbindung der vorwiegend unidirektionalen Faserstränge der Tragwicklung. Vorzugsweise werden die Kernprofile mittels eines Endlosfertigungsverfahrens, z. B. mittels eines Pultrusionsverfahrens, auf kostengünstige Art und Weise hergestellt. Jeder Arm des Dreipunktlenkers erstreckt sich also von seinem Lasteinleitelement über das Kernprofil bis zum Zentrallasteinleitelement.

Die Tragwicklung ist aus einem FKV ausgeformt. Vorzugsweise ist die Tragwicklung aus CFK ausgeformt. Alternativ dazu kann die Tragwicklung aus GFK, AFK oder aus einem anderen geeigneten FKV ausgeformt sein. Die Tragwicklung ist ausgebildet aus vorwiegend unidirektionalen Fasersträngen, die vorzugsweise endlosfaserverstärkt sind. Beispielsweise kann ein flächiges, vorimprägniertes FKV-Prepregmaterial mit einer duromeren Matrix verwendet werden, um die Tragwicklung auszuformen. Alternativ dazu kann ein vorimprägniertes FKV-Faserhalbzeug mit einer thermoplastischen Matrix in Kombination mit einem kurzfaserverstärkten thermoplastischen Spritzgussmaterial verwendet werden.

Die Tragwicklung kann einteilig oder zweiteilig oder mehrteilig ausgeformt sein. Bei einer einteiligen Ausformung ist die Tragwicklung als ein ununterbrochenes Bauelement ausgebildet. Bei einer zweiteiligen Ausformung ist die Tragwicklung aus zwei voneinander getrennten Bauelementen ausgebildet, die jedoch aus demselben FKV ausgeformt sind. Bei einer mehrteiligen Ausformung ist die Tragwicklung aus mehreren voneinander getrennten Bauelementen ausgebildet, die jedoch aus demselben FKV ausgeformt sind. In jedem Fall weist die Tragwicklung zwei lasteinleitelementseitige Enden auf, die jeweils den beiden Lasteinleitelementen zugewandt sind. Weiterhin kann die Tragwicklung eine konstante Stärke aufweisen. Alternativ dazu kann die Tragwicklung einen verdickten Bereich oder mehrere verdickte Bereiche aufweisen.

Die Tragwicklung ist um das Zentrallasteinleitelement herum und an den Kernprofilen entlang geführt und ist mit den Kernprofilen und dem Zentrallasteinleitelement verbunden. Das Zentrallasteinleitelement und die Kernprofile werden in einem Teilbereich umschlossen. Die Tragwicklung kontaktiert das Zentrallasteinleitelement, das ein geometrischer Extrusionskörper ist, an einem Teilbereich seiner Mantelfläche. Die Tragwicklung kontaktiert die Kernprofile, die geometrische Extrusionskörper sind, an einem Teilbereich ihrer Mantelfläche. Die Tragwicklung formt in anderen Worten eine Mantelfläche des Dreipunktlenkers aus, wobei die beiden Lasteinleitelemente nicht umschlossen werden von der Tragwicklung. Jedes Lasteinleitelement ist wirkverbunden mit einem der lasteinleitelementseitigen Enden der Tragwicklung. Dabei ist ein lasteinleitelementseitiges Ende dasjenige Ende der Tragwicklung, das mit dem Lasteinleitelement wirkverbunden ist. Die Tragwicklung kann mittels einer Klebeverbindung mit den Kernprofilen und dem Zentrallasteinleitelement und ggf. mit den Lasteinleitelementen wirkverbunden sein.

Wird der Dreipunktlenker in einem Fahrzeug verwendet, wirken auf die Lager, die mit den Lasteinleitelementen verbunden sind, Lasten ein. Auf das Lager, das mit dem Zentrallasteinleitelement verbunden ist, wirken Lasten ein. Dadurch treten im Dreipunktlenker Zug- und Druckbeanspruchungen sowie Biegespannungen auf. Durch den beschriebenen Multimaterialaufbau des Dreipunktlenkers sind die Verstärkungsfasern des FKV der Tragwicklung optimal in Belastungsrichtung orientiert. Der Dreipunktlenker weist aufgrund der Ausformung der Arme mittels der Kernprofile und der Tragwicklung ein hohes Flächenträgheitsmoment auf, so dass an den Armen auftretende Biegespannungen reduziert werden. Die Arme des Dreipunktlenkers weisen eine hohe Festigkeit auf. Die Zug- und Druckbeanspruchungen werden mittels der Tragwicklung aufgenommen.

Aufgrund des Aufbaus des Dreipunktlenkers mittels einer Tragwicklung aus FKV und mittels Kernprofilen aus einem schubsteifen Material, z. B. FKV oder aus Schaummaterial, weist der Dreipunktlenker eine geringere Masse auf als ein herkömmlicher Dreipunktlenker aus einem metallischen Material. Der Dreipunktlenker ist also ein Leichtbau-Bauteil. Dadurch wird bei der Verwendung des Dreipunktlenkers in einem Fahrzeug die Gesamtmasse des Fahrzeugs verringert, was zu einer Kraftstoffeinsparung und zu einer Erhöhung der möglichen Nutzlast führt. Weiterhin ist vorteilhaft, dass der Dreipunktlenker mittels einfacher Herstellungsverfahren auf einfache und kostengünstige Art und Weise hergestellt werden kann. Zudem ist der Dreipunktlenker besonders tragfähig.

Nach einer Ausführungsform sind die Lasteinleitelemente aus einem metallischen Material ausgeformt. Beispielsweise können die Lasteinleitelemente aus Aluminium, aus einem Stahl, aus Titan oder aus einem anderen geeigneten metallischen Material ausgeformt sein. Die Lasteinleitelemente können mittels eines Strangpressverfahrens mit geringem Fräsanteil auf kostengünstige und einfache Art und Weise hergestellt werden.

Nach einer weiteren Ausführungsform sind die Lasteinleitelemente aus einem FKV ausgeformt. Beispielsweise können die Lasteinleitelemente aus SMC, d. h. aus einem langfaserverstärkten Duromer, ausgeformt sein. Als Verstärkungsfasern können Carbonfasern, Glasfasern, Aramidfaser oder andere geeignete Fasern verwendet werden. Die Lasteinleitelemente können mittels eines Strangpressverfahrens mit geringem Fräsanteil auf kostengünstige und einfache Art und Weise hergestellt werden. Vorteilhaft an der Verwendung von SMC ist, dass die Lasteinleitelemente dadurch eine geringere Masse aufweisen als Lasteinleitelemente aus einem metallischen Material. Dies erhöht das Leichtbaupotential.

Nach einer weiteren Ausführungsform ist das Zentrallasteinleitelement aus einem metallischen Material ausgeformt. Beispielsweise kann das Zentrallasteinleitelement aus Aluminium, aus einem Stahl, aus Titan oder aus einem anderen geeigneten metallischen Material ausgeformt sein. Das Zentrallasteinleitelement kann mittels eines Strangpressverfahrens mit geringem Fräsanteil auf kostengünstige und einfache Art und Weise hergestellt werden.

Nach einer weiteren Ausführungsform ist das Zentrallasteinleitelement aus einem FKV ausgeformt. Beispielsweise kann das Zentrallasteinleitelement aus SMC, d. h. aus einem langfaserverstärkten Duromer, ausgeformt sein. Als Verstärkungsfasern können Carbonfasern, Glasfasern, Aramidfaser oder andere geeignete Fasern verwendet werden. Das Zentrallasteinleitelement kann mittels eines Strangpressverfahrens mit geringem Fräsanteil auf kostengünstige und einfache Art und Weise hergestellt werden. Vorteilhaft an der Verwendung von SMC ist, dass das Zentrallasteinleitelement dadurch eine geringere Masse aufweist als Zentrallasteinleitelemente aus einem metallischen Material. Dies erhöht das Leichtbaupotential.

Erfindungsgemäß weist jedes Lasteinleitelement eine Aufnahme auf, die ein lasteinleitelementseitiges Ende der Tragwicklung aufnimmt. Jede Aufnahme ist derart ausgeformt, dass sie passgenau ist für das lasteinleitelementseitige Ende der Tragwicklung. Das heißt, die Ausformung der Aufnahmen richtet sich nach der Ausformung der lasteinleitelementseitigen Enden der Tragwicklung. Jede Aufnahme kann beispielsweise als gerade Nut, als mehrere gerade Nuten, bogenförmig, rechteckig oder in einer anderen geeigneten Form ausgeformt sein. Selbstverständlich können diese Aufnahmen zwei- oder mehrteilig ausgeformt sein. Das ist beispielsweise der Fall, wenn die Tragwicklung an ihren lasteinleitelementseitigen Enden nicht verbunden ist, sondern zwei Endabschnitte aufweist. In diesem Fall ist die Aufnahme in Form zweier Nuten ausgebildet. Die Aufnahme kann beispielsweise eine konstante Breite aufweisen.

Erfindungsgemäß wird jedes lasteinleitelementseitige Ende der Tragwicklung in seine entsprechende Aufnahme gesteckt und so von dieser aufgenommen. Ein erstes lasteinleitelementseitiges Ende der Tragwicklung wird in eine erste Aufnahme gesteckt und von dieser aufgenommen. Somit ist das erste lasteinleitelementseitige Ende der Tragwicklung mit dem ersten Lasteinleitelement wirkverbunden. Ein zweites lasteinleitelementseitiges Ende der Tragwicklung wird in eine zweite Aufnahme gesteckt und von dieser aufgenommen. Somit ist das zweite lasteinleitelementseitige Ende der Tragwicklung mit dem zweiten Lasteinleitelement wirkverbunden.

Nach einer weiteren Ausführungsform ist die wenigstens eine Aufnahme jedes Lasteinleitelements bogenförmig ausgeformt und jedes lasteinleitelementseitige Ende der Tragwicklung ist als eine Schlaufe ausgeformt, wobei die Aufnahme jedes Lasteinleitelements mit ihrem entsprechenden lasteinleitelementseitigen Ende der Tragwicklung formschlüssig verbunden ist. Die Aufnahmen sind passgenau ausgeformt zu der Schlaufenform der lasteinleitelementseitigen Enden der Tragwicklung. Jedes lasteinleitelementseitige Ende der Tragwicklung formt eine Schlaufe aus, dadurch ist die Tragwicklung einteilig ausgebildet. Die Tragwicklung bildet in anderen Worten eine ununterbrochene Wicklung aus. Während eines Herstellungsverfahrens des Dreipunktlenkers werden Platzhalter eingesetzt, um die Schlaufenform der lasteinleitelementseitigen Enden der Tragwicklung zu realisieren.

Vorteilhaft daran ist, dass ein Formschluss zwischen der Tragwicklung und den Lasteinleitelementen besteht, wodurch die Kraftübertragung zwischen den Lasteinleitelementen und der Tragwicklung verbessert ist.

Nach einer weiteren Ausführungsform ist jedes Lasteinleitelement mittels einer Klebeverbindung stoffschlüssig mit der Tragwicklung wirkverbunden. Das heißt, dass zwischen dem ersten lasteinleitelementseitigen Ende der Tragwicklung und der ersten Aufnahme eine stoffschlüssige Verbindung besteht, die mittels einer Klebeverbindung ausgeformt ist. Außerdem besteht zwischen dem zweiten lasteinleitelementseitigen Ende der Tragwicklung und der zweiten Aufnahme eine stoffschlüssige Verbindung, die mittels einer Klebeverbindung ausgeformt ist. Die Aufnahme jedes Lasteinleitelements nimmt also das jeweilige lasteinleitelementseitige Ende der Tragwicklung sowie eine Klebstoffschicht auf.

Beispielsweise kann jede Aufnahme mit Klebstoff gefüllt sein, so dass das lasteinleitelementseitige Ende der Tragwicklung vollständig mit Klebstoff benetzt ist. Aufgrund der Klebeverbindung ist eine Kraftübertragung zwischen dem jeweiligen Lasteinleitelement und der Tragwicklung verbessert, wenn der Dreipunktlenker in einem Fahrzeug verwendet wird und ein Lastfall auftritt. Zudem hat dies positive Auswirkungen auf die Dauerfestigkeit des Dreipunktlenkers, da somit Bewegungen der lasteinleitelementseitigen Enden innerhalb ihrer entsprechenden Aufnahmen verhindert werden.

Erfindungsgemäß weist jeder Arm räumlich zwischen seinem Kernprofil und seinem Lasteinleitelement eine Aussparung auf. Diese Aussparungen sind materialfreie Spalte. In anderen Worten kontaktieren die Lasteinleitelemente nicht die Kernprofile. Zwischen dem ersten Lasteinleitelement und dem Kernprofil des ersten Arms ist eine erste Aussparung angeordnet. Zwischen dem zweiten Lasteinleitelement und dem Kernprofil des zweiten Arms ist eine zweite Aussparung angeordnet.

Aufgrund der Aussparungen sind die Lasteinleitelemente entkoppelt von den Kernprofilen. Wird der Dreipunktlenker in einem Fahrzeug verwendet und tritt ein Lastfall auf, werden die auftretenden Kräfte in die Lasteinleitelemente eingeleitet. Die Lasteinleitelemente leiten die Kräfte weiter an die Tragwicklung und nicht direkt in die Kernprofile. Dadurch ist die Kraftaufnahme des Dreipunktlenkers in einem Lastfall verbessert.

Nach einer weiteren Ausführungsform weist jeder Arm räumlich zwischen seinem Kernprofil und dem Zentrallasteinleitelement eine Aussparung auf. Diese Aussparungen sind materialfreie Spalte. In anderen Worten kontaktieren die Kernprofile nicht das Zentrallasteinleitelement. Zwischen dem Kernprofil des ersten Arms und dem Zentrallasteinleitelement ist eine dritte Aussparung angeordnet. Zwischen dem Kernprofil des zweiten Arms und dem Zentrallasteinleitelement ist eine vierte Aussparung angeordnet.

Aufgrund der Aussparungen ist das Zentrallasteinleitelement entkoppelt von den Kernprofilen. Wird der Dreipunktlenker in einem Fahrzeug verwendet und tritt ein Lastfall auf, werden die auftretenden Kräfte in das Zentrallasteinleitelement eingeleitet. Das Zentrallasteinleitelement leitet die Kräfte weiter an die Tragwicklung und nicht direkt in die Kernprofile. Dadurch ist die Kraftaufnahme des Dreipunktlenkers in einem Lastfall verbessert.

Nach einer weiteren Ausführungsform ist die Tragwicklung an dem Bereich, an dem diese das Zentrallasteinleitelement kontaktiert, verdickt ausgeformt. Das heißt, dass die Faserlagen der Tragwicklung lokal im Bereich des Zentrallasteinleitelements verdickt, also verstärkt ausgebildet sind. Die Tragwicklung ist dabei mittels einer Klebeverbindung mit dem Zentrallasteinleitelement verbunden. Diese Klebeverbindung ist flächig ausgeführt. Diese Klebeverbindung dient zur Weitergabe der Lasten zwischen den Fasersträngen und zur Abtragung der auftretenden Lasten an dem Zentrallasteinleitelement, wenn der Dreipunktlenker in einem Fahrzeug verwendet wird und ein Lastfall auftritt.

Nach einer weiteren Ausführungsform ist wenigstens ein Lasteinleitelement der beiden Lasteinleitelemente zweiteilig ausgeformt. Beispielsweise kann das zweiteilige Lasteinleitelement zwei spiegelgleiche Einzelteile aufweisen. Alternativ kann das zweiteilige Lasteinleitelement zwei Einzelteile aufweisen, die voneinander verschieden ausgeformt sind. Die beiden Einzelteile sind vorzugsweise mittels einer stoffschlüssigen Verbindung, z. B. mittels einer Klebeverbindung, miteinander verbunden. Alternativ oder zusätzlich dazu können die Einzelteile mittels einer formschlüssigen Verbindung, z. B. mittels einer Steckverbindung miteinander verbunden sein. Vorteilhaft daran ist, dass der während eines Herstellungsverfahrens des Dreipunktlenkers die Herstellung vereinfacht ist, weil die Tragwicklung erst mit einem ersten Einzelteil des Lasteinleitelements verbunden wird, und anschließend mit einem zweiten Einzelteil des Lasteinleitelements.

Nach einer weiteren Ausführungsform ist das schubsteife Material der Kernprofile ein Faserkunststoffverbundmaterial oder ein Schaummaterial. Das schubsteife Material ist ein Leichtbau-Material. Vorzugsweise ist das schubsteife Material ein FKV oder ein Schaummaterial. Als FKV kann beispielsweise ein GFK, ein CFK, ein AFK oder ein anderer geeigneter FKV verwendet werden. Als Schaummaterial kann beispielsweise ein Kunststoffschaum oder ein metallischer Schaum verwendet werden. Dieses Kunststoffschaummaterial kann beispielsweise aufgeschäumtes Polyurethan, Polypropylen, Polycarbonat, oder ein anderer geeigneter Kunststoff sein. Das metallische Schaummaterial kann beispielsweise aufgeschäumtes Aluminium, eine metallische Legierung auf Bismutbasis oder ein anderes geeignetes metallisches Material sein.

Bei einem Verfahren zur Herstellung eines Dreipunktlenkers für ein Fahrwerk eines Fahrzeugs, wie er bereits in der vorherigen Beschreibung beschrieben wurde, werden zuerst das Zentrallasteinleitelement und die Kernprofile in ein Werkzeug eingelegt. In dem Werkzeug sind diese an ihrer Position fixiert. Die Kernprofile und das Zentrallasteinleitelement sind vor dem Einlegen in das Werkzeug selbstverständlich gereinigt worden. Anschließend wird die Tragwicklung an dem Zentrallasteinleitelement und den Kernprofilen abgelegt und mittels einer Klebeverbindung mit diesen wirkverbunden. Daraufhin wird die Tragwicklung ausgehärtet. Die Tragwicklung wird dann mit den beiden Lasteinleitelementen wirkverbunden mittels einer stoffschlüssigen und/ oder formschlüssigen Verbindung. Die Lasteinleitelemente sind selbstverständlich vor der Verwendung gereinigt worden. Im Falle einer stoffschlüssigen Verbindung wird diese zudem ausgehärtet. Der Dreipunktlenker wird abschließend dem Werkzeug entnommen. Um den Dreipunktlenker in einem Fahrzeug zu nutzen, werden Lager in die Lageraufnahmen der Lasteinleitelemente und des Zentrallasteinleitelements eingefügt, z. B. eingepresst oder eingeklebt mittels einer Spielpassung. Anhand der im Folgenden erläuterten Figuren werden verschiedene Ausführungsbeispiele und Details der Erfindung näher beschrieben. Es zeigen:
- Fig. 1: eine schematische Darstellung einer Draufsicht eines Dreipunktlenkers nach einem Ausführungsbeispiel,
- Fig. 2: eine schematische Darstellung einer Seitenansicht des Dreipunktlenkers nach dem Ausführungsbeispiel aus Fig. 1,
- Fig. 3: eine schematische Darstellung einer Schnittansicht entlang der Schnittebene A-A des Lasteinleitelements des Dreipunktlenkers nach dem Ausführungsbeispiel aus Fig. 1 und Fig. 2,
- Fig. 4: eine schematische Darstellung einer Seitenansicht eines Dreipunktlenkers nach einem weiteren Ausführungsbeispiel,
- Fig. 5: eine schematische Detaildarstellung eines Lasteinleitelements und eines Kernprofils des Dreipunktlenkers nach dem Ausführungsbeispiel aus Fig. 4.

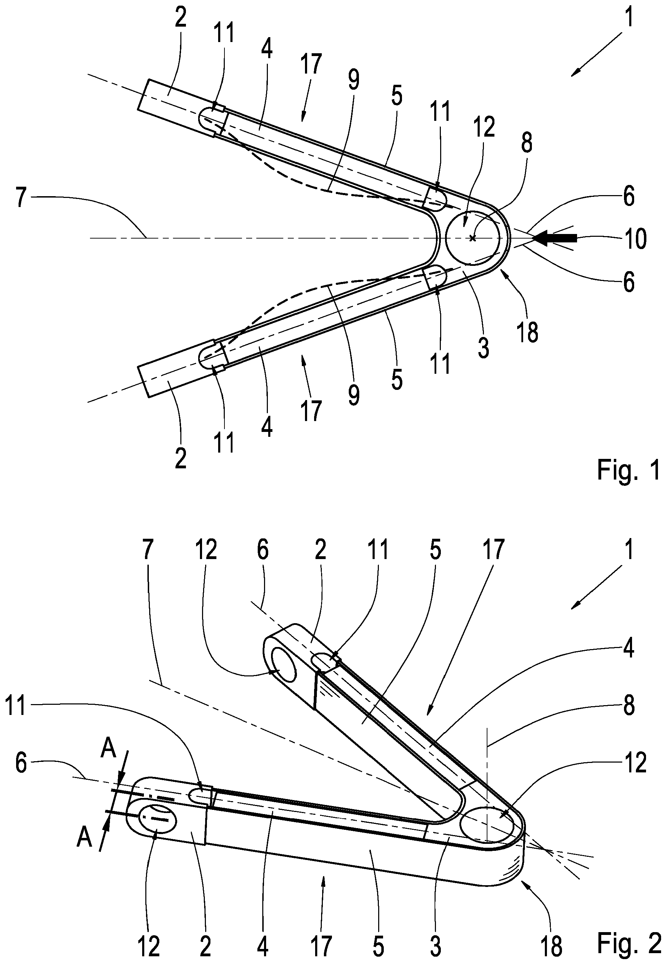

Fig. 1 zeigt eine schematische Darstellung einer Draufsicht eines Dreipunktlenkers 1 nach einem Ausführungsbeispiel. Der Dreipunktlenker 1 weist zwei Lasteinleitelemente 2, ein Zentrallasteinleitelement 3, zwei Kernprofile 4 und eine Tragwicklung 5 auf. Der Dreipunktlenker 1 ist ausgebildet aus zwei Armen 17 und einem Zentrallagerbereich 18. Jeder Arm weist ein Lasteinleitelement 2 und ein Kernprofil 4 auf. Der Zentrallagerbereich 18 ist mittels des Zentrallasteinleitelements 3 ausgeformt. Jeder Arm 17 erstreckt sich von seinem Lasteinleitelement 2 über sein Kernprofil 4 bis zu dem Zentrallasteinleitelement 3. Jeder Arm 17 weist eine Längsachse 6 auf. Diese Längsachse 6 eines Arms 17 erstreckt sich ebenfalls von dem Lasteinleitelement 2 des Arms 17 über das Kernprofil 4 desselben Arms 17 bis hin zu dem Zentrallasteinleitelement 3. Der Dreipunktlenker 1 ist symmetrisch ausgeformt zu einer Mittelebene, in der eine Mittelachse 7 angeordnet ist. Diese Mittelachse 7 weist denselben Abstand zu jeder Längsachse 6 auf. Zudem ist die Mittelachse 7 senkrecht zu einer Lagerachse 8 des Zentrallasteinleitelements 3.

Das Zentrallasteinleitelement 3 weist eine Lageraufnahme 12 auf, die dazu geeignet ist, ein Zentrallager aufzunehmen. Ebenso weisen die beiden Lasteinleitelemente 2 jeweils eine Lageraufnahme 12 auf, die in dieser Darstellung jedoch nicht zu sehen sind. Die Lagerachse 8 des Zentrallasteinleitelements 3 ist dabei senkrecht zu einer Ebene ausgebildet, in der die beiden Lagerachsen der beiden Lasteinleitelemente 2, die hier jedoch nicht dargestellt sind, angeordnet sind. Diese Ebene ist ebenfalls senkrecht zu der Mittelebene des Dreipunktlenkers 1, in dem sich die Mittelachse 7 befindet. Diese Lagerachse 8 liegt innerhalb der Mittelebene des Dreipunktlenkers 1, in welcher auch die Mittelachse 7 liegt.

Die Tragwicklung 5 formt eine Mantelfläche des Dreipunktlenkers 1 aus. Die Tragwicklung 5 ist hierbei zweiteilig ausgeformt. Die Tragwicklung 5 kontaktiert das Zentrallasteinleitelement 3 sowie die beiden Kernprofile 4 in einem Teilbereich und umschließt diese im selben Teilbereich. Die Tragwicklung 5 kontaktiert ebenfalls die beiden Lasteinleitelemente 2, umschließt diese jedoch nicht. Die Tragwicklung 5 weist zwei lasteinleitelementseitige Enden auf, die aufgenommen sind von jeweils einer Aufnahme der Lasteinleitelemente 2. Jedes Lasteinleitelement 2 weist also eine Aufnahme auf, die hier jedoch nicht zu erkennen ist.

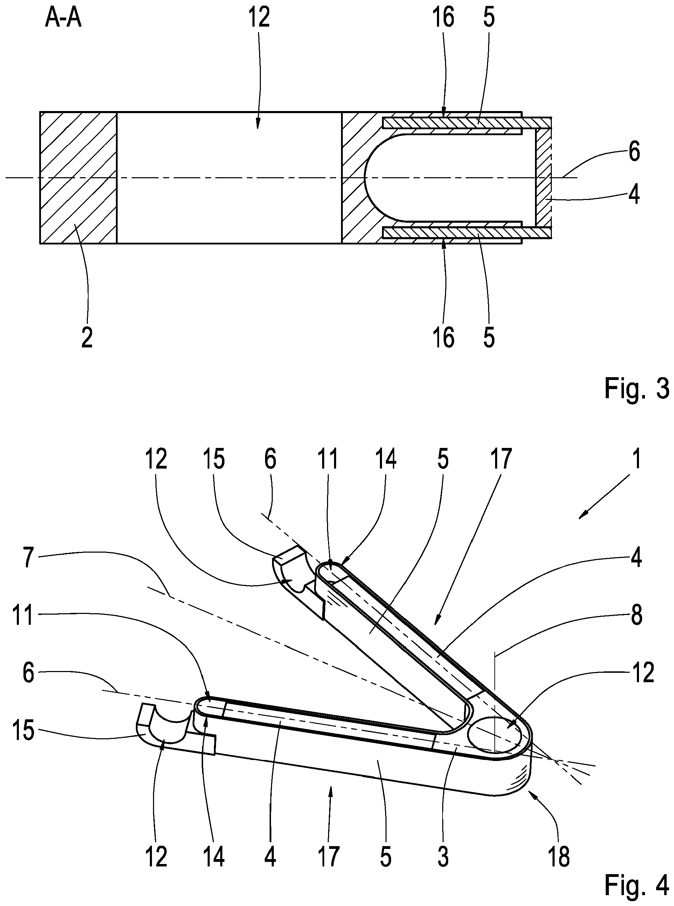

Ein erstes lasteinleitelementseitiges Ende der Tragwicklung 5 ist in eine Aufnahme des ersten Lasteinleitelements 2 gesteckt und mit diesem ersten Lasteinleitelement 2 wirkverbunden. Ein zweites lasteinleitelementseitiges Ende der Tragwicklung 5 ist in eine Aufnahme des zweiten Lasteinleitelements 2 gesteckt und mit diesem wirkverbunden. Die genaue Ausformung dieser Aufnahmen ist in Fig. 3 näher dargestellt. Die Wirkverbindungen zwischen der Tragwicklung 5 und den beiden Lasteinleitelementen 2 wird mittels einer Klebeverbindung hergestellt. Die Tragwicklung 5 ist ebenfalls mit den beiden Kernprofilen 4 und dem Zentrallasteinleitelement 3 verklebt.

Zwischen dem Lasteinleitelement 2 des ersten Arms 17 und dem Kernprofil 4 des ersten Arms 17 ist eine materialfreie Aussparung 12 angeordnet. Zwischen dem Lasteinleitelement 2 des zweiten Arms 17 und dem Kernprofil 4 des zweiten Arms 17 ist eine materialfreie Aussparung 11 angeordnet. Die beiden Kernprofile 4 sind also entkoppelt von den beiden Lasteinleitelementen 2. Zwischen dem Zentrallasteinleitelement 3 und dem Kernprofil 4 des ersten Arms 17 ist ein materialfreier Spalt 11 angeordnet. Zwischen dem Zentrallasteinleitelement 3 und dem Kernprofil 4 des zweiten Arms 17 ist eine materialfreie Aussparung 11 angeordnet. Das Zentrallasteinleitelement 3 ist also von den beiden Kernprofilen 4 entkoppelt.

Wird der Dreipunktlenker 1 in einem Fahrzeug verwendet, tritt an dem Zentrallagerbereich 18 eine Längslast 10 auf. Diese ist mittels eines Pfeils dargestellt. Aufgrund dieser Längslast 10 kommt es zu einer Verformung beider Arme 17, was in übertriebener Art und Weise mittels der beiden Biegelinien 9 dargestellt ist. Aufgrund der Entkopplung der beiden Kernprofile 4 von den beiden Lasteinleitelementen 2 und dem Zentrallasteinleitelement 3 erfolgt in einem Lastfall eine Kraftübertragung von den Lasteinleitelementen 2 bzw. von dem Zentrallasteinleitelement 3 in die Tragwicklung 5 und nicht direkt in das Kernprofil 4 bzw. die Kernprofile 4. Dadurch ist die Kraftaufnahme des Dreipunktlenkers 1 verbessert.

Die beiden Kernprofile 4 sind ausgeformt aus einem FKV, genauer aus einem GFK. Die Tragwicklung 5 ist ausgeformt aus vorwiegend unidirektionalen Fasersträngen, z. B. aus CFK oder GFK. Die beiden Lasteinleitelemente 2 und das Zentrallasteinleitelement 3 sind aus Aluminium ausgeformt. Aufgrund dieser Multimaterialbauweise weist der Dreipunktlenker 1 ein erhöhtes Leichtbaupotenzial auf. Zudem ist der Dreipunktlenker 1 besonders tragfähig und genügt den vorgegebenen kinematischen Anforderungen. Der Dreipunktlenker 1 weist eine geringere Masse auf als ein herkömmlicher Dreipunktlenker aus dem Stand der Technik, der vollständig aus einem metallischen Material ausgeformt ist.

Fig. 2 zeigt eine schematische Darstellung einer Seitenansicht des Dreipunktlenkers 1 nach dem Ausführungsbeispiel aus Fig. 1. Hier sind deutlich die Lageraufnahmen 12 der beiden Lasteinleitelemente 2 zu erkennen. Die Lagerachsen dieser Lageraufnahmen 12 liegen in einer Ebene, die senkrecht ist zu der Lagerachse 8 des Zentrallasteinleitelements 3. Zudem ist deutlich zu erkennen, dass die beiden Lasteinleitelemente 2 die lasteinleitelementseitigen Enden der Tragwicklung 5 mittels ihrer Aufnahmen aufnehmen. Weiterhin ist eine Schnittebene A-A eingezeichnet.

Fig. 3 zeigt eine schematische Darstellung einer Schnittansicht entlang der Schnittebene A-A des Lasteinleitelements 2 des Dreipunktlenkers 1 nach dem Ausführungsbeispiel aus Fig. 1 und Fig. 2. Zur besseren Orientierung ist ein Teilbereich des Kernprofils 4 sowie die Längsachse 6 eingezeichnet.

Das Lasteinleitelement 2 weist die Lageraufnahme 12 auf. Zudem weist das Lasteinleitelement 2 eine Aufnahme 16 für das lasteinleitelementseitige Ende der Tragwicklung 5 auf. Diese Aufnahme 16 ist zweigeteilt ausgeformt. Die Aufnahme 16 ist in Form zweier gerader Nuten ausgebildet. Diese sind passgenau für das lasteinleitelementseitige Ende der Tragwicklung 5, wobei eine formschlüssige Verbindung vorliegt. Die lasteinleitelementseitigen Enden der Tragwicklung 5 sind mittels einer Klebeverbindung mit der Aufnahme 16 des Lasteinleitelements stoffschlüssig verbunden. Die Klebeverbindung dient dazu, eine Wirkverbindung herzustellen zwischen dem Lasteinleitelement 2 und der Tragwicklung 5.

Fig. 4 zeigt eine schematische Darstellung einer Seitenansicht eines Dreipunktlenkers 1 nach einem weiteren Ausführungsbeispiel. Der hier dargestellte Dreipunktlenker 1 weist wie bereits der Dreipunktlenker aus Fig. 1 und Fig. 2 zwei Arme 17 und einen Zentrallagerbereich 18 auf. Der Zentrallagerbereich 18 ist ausgeformt mittels des Zentrallasteinleitelements 3. Jeder Arm 17 weist ein Kernprofil 4 und ein Lasteinleitelement 15 auf. Ein erster Arm 17 erstreckt sich von einem ersten Lasteinleitelement 15 über ein erstes Kernprofil 4 bis hin zu dem Zentrallasteinleitelement 3. Ein zweiter Arm 17 erstreckt sich von einem zweiten Lasteinleitelement 15 über ein zweites Kernprofil 4 bis zu dem Zentrallasteinleitelement 3. Eine Tragwicklung 5 umschließt die beiden Kernprofile 4 sowie das Zentrallasteinleitelement 3 in einem Teilbereich und kontaktiert diese in diesem Teilbereich. Die Tragwicklung 5 kontaktiert zudem die beiden Lasteinleitelemente 15, umschließt diese aber nicht. Die Tragwicklung 5 formt also eine Mantelfläche des Dreipunktlenkers 1 aus.

Das Zentrallasteinleitelement 3 ist ebenso ausgeformt wie in Fig. 1 und Fig. 2 dargestellt. Das Zentrallasteinleitelement 3 weist eine Lageraufnahme 12 auf. Diese Lageraufnahme 12 weist eine Lagerachse 8 auf. Diese Lagerachse 8 liegt innerhalb einer Mittelebene des Dreipunktlenkers 1, in welcher auch die Mittelachse 7 liegt. Die Lagerachse 8 ist senkrecht zu der Mittelachse 7. Jeder Arm 17 weist eine Längsachse 6 auf, die sich von dem Lasteinleitelement 15 über das Kernprofil 4 bis hin zum Zentrallasteinleitelement 3 erstreckt. Die Mittelachse 7 weist zu beiden Längsachsen 6 denselben Abstand auf.

Die beiden Lasteinleitelemente 15 sind im Gegensatz zu den Lasteinleitelementen aus Fig. 1 bis Fig. 3 zweiteilig ausgeformt. Zur besseren Übersicht ist hier jeweils nur ein Teil der beiden Lasteinleitelemente 15 dargestellt. Die beiden Einzelteile jedes Lasteinleitelements 15 sind spiegelgleich zueinander ausgebildet. Sind die beiden Einzelteile der Lasteinleitelemente 15 miteinander gefügt, weisen diese dieselbe äußere Form auf wie die Lasteinleitelemente aus Fig. 1 bis Fig. 3. Jedes Lasteinleitelement 15 weist eine Lageraufnahme 12 auf. Diese Lageraufnahme 12 weist eine Lagerachse auf, wobei die beiden Lagerachsen der beiden Lasteinleitelemente 15 in derselben Ebene angeordnet sind. Diese Ebene ist senkrecht zu der Lagerachse 8 des Zentrallasteinleitelements 3.

Hier ist deutlich zu erkennen, dass die Aufnahme 16 jedes Lasteinleitelements 5 in Form eines Bogens ausgeformt ist. Diese sind passgenau für die Schlaufen 14 der Tragwicklung 5. Die beiden lasteinleitelementseitigen Enden der Tragwicklung 5 sind als Schlaufe 14 ausgebildet. Jede Schlaufen 14 ist wirkverbunden mit ihrem entsprechenden Lasteinleitelement 15, wobei diese Wirkverbindung formschlüssig ist. Zudem sind die beiden Schlaufen 14 mittels einer Klebeverbindung stoffschlüssig mit den beiden Lasteinleitelementen 15 wirkverbunden.

Weiterhin ist zu erkennen, dass zwischen jedem Lasteinleitelement 15 und jedem Kernprofil 4 des Dreipunktlenkers 1 jeweils eine materialfreie Aussparung 11 angeordnet ist. Das erste Lasteinleitelement 15 ist also entkoppelt von dem ersten Kernprofil 4. Das zweite Lasteinleitelement 15 ist ebenfalls entkoppelt von dem zweiten Kernprofil 4. Wird der Dreipunktlenker 1 in einem Fahrzeug verwendet und tritt ein Lastfall auf, werden Kräfte beispielsweise in die beiden Lasteinleitelemente 15 eingeleitet. Die Lasteinleitelemente 15 leiten diese Kräfte an die Tragwicklung 5 und nicht direkt an das Kernprofil 4 weiter. Die Tragwicklung 5 nimmt diese Kräfte auf.

Jedes Kernprofil 4 ist aus einem FKV, genauer aus GFK, ausgeformt. Die Tragwicklung 5 ist aus einem FKV, nämlich aus CFK oder GFK, ausgeformt. Die beiden Lasteinleitelemente 15 und das Zentrallasteinleitelement 3 sind aus SMC ausgeformt. Dadurch weist der gezeigte Dreipunktlenker 1 ein erhöhtes Leichtbaupotenzial auf und weist eine geringere Masse auf als ein herkömmlicher Dreipunktlenker aus einem metallischen Material. Die Ausformung der beiden lasteinleitelementseitigen Enden der Tragwicklung 5 als Schlaufe 14 hat eine positive Auswirkung auf die Dauerfestigkeit des Dreipunktlenkers 1.

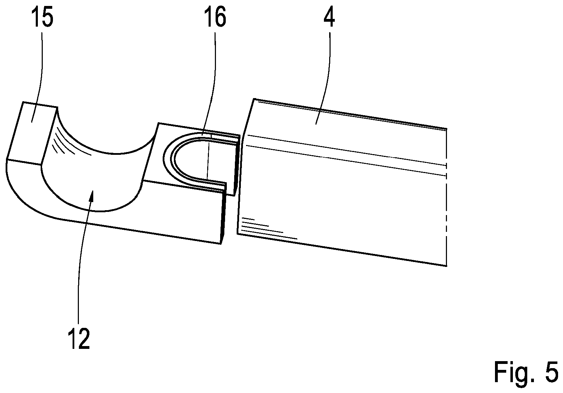

Fig. 5 zeigt eine schematische Detaildarstellung eines Lasteinleitelements 15 und eines Kernprofils 4 des Dreipunktlenkers 1 nach dem Ausführungsbeispiel aus Fig. 4. Hier ist deutlich zu erkennen, dass die Aufnahme 16 bogenförmig ausgeformt ist, um die Schlaufe der Tragwicklung des Dreipunktlenkers 1 aufzunehmen. Zudem ist deutlich die materialfreie Aussparung 11 zwischen dem Lasteinleitelement 15 und dem Kernprofil 4 zu sehen. Diese beiden Bauelemente sind also nicht miteinander gekoppelt.

Die hier dargestellten Beispiele sind nur beispielhaft gewählt. Beispielsweise können die Lasteinleitelemente und das Zentrallasteinleitelement aus Fig. 1 bis Fig. 3 aus einem FKV, z. B. aus SMC ausgeformt sein. Beispielsweise können die Lasteinleitelemente und das Zentrallasteinleitelement aus Fig. 4 bis Fig. 5 aus einem metallischen Material, z. B. aus Aluminium ausgeformt sein.

### Bezugszeichen

- 1: Dreipunktlenker
- 2: Lasteinleitelement
- 3: Zentrallasteinleitelement
- 4: Kernprofil
- 5: Tragwicklung
- 6: Längsachse
- 7: Mittelachse
- 8: Lagerachse
- 9: Biegelinie
- 10: Längslast
- 11: Aussparung
- 12: Lageraufnahme
- 14: Schlaufe
- 15: Lasteinleitelement
- 16: Aufnahme
- 17: Arm
- 18: Zentrallagerbereich
- A-A: Schnittebene

## Patentansprüche

1. Dreipunktlenker (1) für ein Fahrwerk eines Fahrzeugs, umfassend zwei Lasteinleitelemente (2, 15), ein Zentrallasteinleitelement (3), zwei Kernprofile (4) und eine Tragwicklung (5), wobei
- die Kernprofile (4) aus einem schubsteifen Material ausgeformt sind,
- die Tragwicklung (5) aus einem Faserkunststoffverbundmaterial ausgeformt ist,
- der Dreipunktlenker (1) zwei Arme (17) und einen Zentrallagerbereich (18) aufweist,
- an dem Zentrallagerbereich (18) das Zentrallasteinleitelement (3) angeordnet ist,
- jeder Arm (17) mit dem Zentrallagerbereich (18) verbunden ist,
- jeder Arm (17) eines der Lasteinleitelemente (2, 15) aufweist, das an einem dem Zentrallagerbereich (18) entgegengesetzten Ende des entsprechenden Arms (17) angeordnet ist,
- jeder Arm (17) eines der Kernprofile (4) aufweist, das räumlich zwischen dem Lasteinleitelement (2, 15) und dem Zentrallasteinleitelement (3) angeordnet ist,
- die Tragwicklung (5) die Kernprofile (4) und das Zentrallasteinleitelement (3) in einem Teilbereich umschließt und wirkverbunden ist mit den Kernprofilen (4), den Lasteinleitelementen (2, 15) und dem Zentrallasteinleitelement (3), und
- jedes Lasteinleitelement (2, 15) eine Aufnahme (16) aufweist, die ein lasteinleitelementseitiges Ende der Tragwicklung (5) aufnimmt,
**dadurch gekennzeichnet, dass**
- jedes lasteinleitelementseitige Ende der Tragwicklung in seine entsprechende Aufnahme gesteckt und so von dieser aufgenommen ist, sodass es mit dem entsprechenden Lasteinleitelement (2, 15) wirkverbunden ist, und
- jeder Arm räumlich zwischen seinem Kernprofil (4) und seinem Lasteinleitelement (2, 15) eine Aussparung (11) aufweist.

2. Dreipunktlenker (1) nach Anspruch 1, **dadurch gekennzeichnet, dass** die Lasteinleitelemente (2, 15) aus einem metallischen Material ausgeformt sind.

3. Dreipunktlenker (1) nach Anspruch 1, **dadurch gekennzeichnet, dass** die Lasteinleitelemente (2, 15) aus einem Faserkunststoffverbundmaterial ausgeformt sind.

4. Dreipunktlenker (1) nach einem der vorherigen Ansprüche, **dadurch gekennzeichnet, dass** das Zentrallasteinleitelement (3) aus einem metallischen Material ausgeformt ist.

5. Dreipunktlenker (1) nach einem der Ansprüche 1 bis 3, **dadurch gekennzeichnet, dass** das Zentrallasteinleitelement (3) aus einem Faserkunststoffverbundmaterial ausgeformt ist.

6. Dreipunktlenker (1) nach einem der vorherigen Ansprüche, **dadurch gekennzeichnet, dass** die wenigstens eine Aufnahme (16) jedes Lasteinleitelements (2, 15) bogenförmig ausgeformt ist und jedes lasteinleitelementseitige Ende der Tragwicklung (5) als eine Schlaufe (14) ausgeformt ist, wobei die Aufnahme (16) jedes Lasteinleitelements (2, 15) mit ihrem entsprechenden lasteinleitelementseitigen Ende der Tragwicklung (5) formschlüssig verbunden ist.

7. Dreipunktlenker (1) nach einem der vorherigen Ansprüche, **dadurch gekennzeichnet, dass** jedes Lasteinleitelement (2, 15) mittels einer Klebeverbindung stoffschlüssig mit der Tragwicklung (5) wirkverbunden ist.

8. Dreipunktlenker (1) nach einem der vorherigen Ansprüche, **dadurch gekennzeichnet, dass** jeder Arm räumlich zwischen seinem Kernprofil (4) und dem Zentrallasteinleitelement (3) eine Aussparung (11) aufweist.

9. Dreipunktlenker (1) nach einem der vorherigen Ansprüche, **dadurch gekennzeichnet, dass** die Tragwicklung (5) an dem Bereich, an dem diese das Zentrallasteinleitelement (3) kontaktiert, verdickt ausgeformt ist.

10. Dreipunktlenker (1) nach einem der vorherigen Ansprüche, **dadurch gekennzeichnet, dass** wenigstens ein Lasteinleitelement (15) zweiteilig ausgeformt ist.

11. Dreipunktlenker (1) nach einem der vorherigen Ansprüche, **dadurch gekennzeichnet, dass** das schubsteife Material der Kernprofile (4) ein Faserkunststoffverbundmaterial oder ein Schaummaterial ist.

12. Verfahren zur Herstellung eines Dreipunktlenkers für eine Achse eines Fahrzeugs nach einem der vorherigen Ansprüche, **dadurch gekennzeichnet, dass**
- das Zentrallasteinleitelement (3) und die Kernprofile (4) in ein Werkzeug eingelegt werden,
- anschließend die Tragwicklung (5) an dem Zentrallasteinleitelement (3) und den Kernprofilen (4) abgelegt wird und mittels einer Klebeverbindung mit diesen wirkverbunden wird,
- daraufhin die Tragwicklung (5) ausgehärtet wird,
- dann die Tragwicklung (5) mit den beiden Lasteinleitelementen (2, 15) mittels einer stoffschlüssigen und/ oder formschlüssigen Verbindung wirkverbunden wird, wobei jedes lasteinleitelementseitige Ende der Tragwicklung in seine entsprechende Aufnahme gesteckt und so von dieser aufgenommen wird, und
- abschließend der Dreipunktlenker (1) dem Werkzeug entnommen wird.

## Claims

1. Three-point linkage (1) for a chassis of a vehicle, comprising two load introduction elements (2, 15), a central load introduction element (3), two core profiles (4) and a loadbearing winding (5),
- the core profiles (4) being formed from a shear-resistant material,
- the loadbearing winding (5) being formed from a fibre-reinforced plastic composite material,
- the three-point linkage (1) having two arms (17) and a central bearing region (18),
- the central load introduction element (3) being arranged on the central bearing region (18),
- each arm (17) being connected to the central bearing region (18),
- each arm (17) having one of the load introduction elements (2, 15) which is arranged at an end of the corresponding arm (17), which end is opposite the central bearing region (18),
- each arm (17) having one of the core profiles (4) which is arranged spatially between the load introduction element (2, 15) and the central load introduction element (3),
- the loadbearing winding (5) enclosing the core profiles (4) and the central load introduction element (3) in a part region and being operatively connected to the core profiles (4), the load introduction elements (2, 15) and the central load introduction element (3), and
- each load introduction element (2, 15) having a support (16) which receives a load introduction element-side end of the loadbearing winding (5),
**characterized in that**
- each load introduction element-side end of the loadbearing winding is plugged into its corresponding support and is received by the latter in such a way that it is operatively connected to the corresponding load introduction element (2, 15), and
- each arm has a cut-out (11) between its core profile (4) and its load introduction element (2, 15).

2. Three-point linkage (1) according to Claim 1, **characterized in that** the load introduction elements (2, 15) are formed from a metallic material.

3. Three-point linkage (1) according to Claim 1, **characterized in that** the load introduction elements (2, 15) are formed from a fibre-reinforced plastic composite material.

4. Three-point linkage (1) according to one of the preceding claims, **characterized in that** the central load introduction element (3) is formed from a metallic material.

5. Three-point linkage (1) according to one of Claims 1 to 3, **characterized in that** the central load introduction element (3) is formed from a fibre-reinforced plastic composite material.

6. Three-point linkage (1) according to one of the preceding claims, **characterized in that** the at least one support (16) of each load introduction element (2, 15) is shaped in an arcuate manner, and each load introduction element-side end of the loadbearing winding (5) is formed as a loop (14), the support (16) of each load introduction element (2, 15) being connected in a positively locking manner to its corresponding load introduction element-side end of the loadbearing winding (5) .

7. Three-point linkage (1) according to one of the preceding claims, **characterized in that** each load introduction element (2, 15) is operatively connected to the loadbearing winding (5) in an integrally joined manner by means of an adhesive bond.

8. Three-point linkage (1) according to one of the preceding claims, **characterized in that** each arm has a cut-out (11) spatially between its core profile (4) and the central load introduction element (3).

9. Three-point linkage (1) according to one of the preceding claims, **characterized in that** the loadbearing winding (5) is formed in a thickened manner on the region, with which the central load introduction element (3) makes contact.

10. Three-point linkage (1) according to one of the preceding claims, **characterized in that** at least one load introduction element (15) is formed in two pieces.

11. Three-point linkage (1) according to one of the preceding claims, **characterized in that** the shear-resistant material of the core profiles (4) is a fibre-reinforced plastic composite material or a foam material.

12. Method for producing a three-point linkage for an axle of a vehicle according to one of the preceding claims, **characterized in that**
- the central load introduction element (3) and the core profiles (4) are inserted into a mould,
- the loadbearing winding (5) is subsequently deposited on the central load introduction element (3) and the core profiles (4), and is operatively connected to them by means of an adhesive bond,
- the loadbearing winding (5) is thereupon cured,
- the loadbearing winding (5) is then operatively connected to the two load introduction elements (2, 15) by means of an integrally joined and/or positively locking connection, each load introduction element-side end of the loadbearing winding being plugged into its corresponding support and thus being received by the latter, and
- the three-point linkage (1) is finally removed from the mould.

## Revendications

1. Bras de suspension à trois points (1) pour un châssis d'un véhicule, comprenant deux éléments de transfert de charge (2, 15), un élément de transfert de charge central (3), deux profilés de noyau (4) et un enroulement porteur (5),
- les profilés de noyau (4) étant formés d'un matériau résistant à la poussée,
- l'enroulement porteur (5) étant formé d'un matériau plastique renforcé par des fibres,
- le bras de suspension à trois points (1) présentant deux bras (17) et une zone de palier centrale (18),
- l'élément de transfert de charge central (3) étant disposé au niveau de la zone de palier centrale (18),
- chaque bras (17) étant relié à la zone de palier centrale (18),
- chaque bras (17) présentant l'un des éléments de transfert de charge (2, 15) qui est disposé à une extrémité du bras correspondant (17), opposée à la zone de palier centrale (18),
- chaque bras (17) présentant l'un des profilés de noyau (4) qui est disposé physiquement entre l'élément de transfert de charge (2, 15) et l'élément de transfert de charge central (3),
- l'enroulement porteur (5) englobant les profilés de noyau (4) et l'élément de transfert de charge central (3) dans une zone partielle et étant en relation active avec les profilés de noyau (4), les éléments de transfert de charge (2, 15) et l'élément de transfert de charge central (3), et
- chaque élément de transfert de charge (2, 15) présentant un logement (16) qui reçoit une extrémité côté élément de transfert de charge de l'enroulement porteur (5),
**caractérisé en ce que**
- chaque extrémité côté élément de transfert de charge de l'enroulement porteur est emboîtée dans son logement respectif et est ainsi reçue par celui-ci de sorte qu'elle est en relation active avec l'élément de transfert de charge (2, 15) respectif, et
- chaque bras présente physiquement un évidement (11) entre son profilé de noyau (4) et son élément de transfert de charge (2, 15).

2. Bras de suspension à trois points (1) selon la revendication 1, **caractérisé en ce que** les éléments de transfert de charge (2, 15) sont formés d'un matériau métallique.

3. Bras de suspension à trois points (1) selon la revendication 1, **caractérisé en ce que** les éléments de transfert de charge (2, 15) sont formés d'un matériau plastique renforcé par des fibres.

4. Bras de suspension à trois points (1) selon l'une quelconque des revendications précédentes, **caractérisé en ce que** l'élément de transfert de charge central (3) est formé d'un matériau métallique.

5. Bras de suspension à trois points (1) selon l'une quelconque des revendications 1 à 3, **caractérisé en ce que** l'élément de transfert de charge central (3) est formé d'un matériau plastique renforcé par des fibres.

6. Bras de suspension à trois points (1) selon l'une quelconque des revendications précédentes, **caractérisé en ce que** ledit au moins un logement (16) de chaque élément de transfert de charge (2, 15) est formé en arc, et chaque extrémité côté élément de transfert de charge de l'enroulement porteur (5) est formé en boucle (14), le logement (16) de chaque élément de transfert de charge (2, 15) étant relié par complémentarité de forme à son extrémité côté élément de transfert de charge correspondante de l'enroulement porteur (5).

7. Bras de suspension à trois points (1) selon l'une quelconque des revendications précédentes, **caractérisé en ce que** chaque élément de transfert de charge (2, 15) est en relation active avec l'enroulement porteur (5) par liaison de matière au moyen d'un assemblage collé.

8. Bras de suspension à trois points (1) selon l'une quelconque des revendications précédentes, **caractérisé en ce que** chaque bras présente physiquement un évidement (11) entre son profilé de noyau (4) et l'élément de transfert de charge central (3).

9. Bras de suspension à trois points (1) selon l'une quelconque des revendications précédentes, **caractérisé en ce que** l'enroulement porteur (5) est formé en surépaisseur au niveau de la zone où il entre en contact avec l'élément de transfert de charge central (3) .

10. Bras de suspension à trois points (1) selon l'une quelconque des revendications précédentes, **caractérisé en ce qu'**au moins un élément de transfert de charge (15) est formé en deux parties.

11. Bras de suspension à trois points (1) selon l'une quelconque des revendications précédentes, **caractérisé en ce que** le matériau résistant à la poussée des profilés de noyau (4) est un matériau plastique renforcé par des fibres ou un matériau alvéolaire.

12. Procédé de fabrication d'un bras de suspension à trois points pour un axe d'un véhicule selon l'une quelconque des revendications précédentes, **caractérisé en ce que**
- l'élément de transfert de charge central (3) et les profilés de noyau (4) sont placés dans un moule,
- ensuite, l'enroulement porteur (5) est déposé au niveau de l'élément de transfert de charge central (3) et des profilés de noyau (4) et est mis en relation active avec ceux-ci au moyen d'un assemblage collé,
- ensuite, l'enroulement porteur (5) est durci,
- ensuite, l'enroulement porteur (5) est mis en relation active avec les deux éléments de transfert de charge (2, 15) au moyen d'un assemblage par liaison de matière et/ou par complémentarité de forme, chaque extrémité côté élément de transfert de charge de l'enroulement porteur étant emboîtée dans son logement respectif et étant ainsi reçue par celui-ci, et
- enfin, le bras de suspension à trois points (1) est retiré du moule.
